# EUROPEAN PATENT SPECIFICATION

(11) **EP 1 497 551 B1**
(45) Date of publication and mention of the grant of the patent: **23.07.2008**
(21) Application number: 03746837.8
(22) Date of filing: 16.04.2003
(51) Int. Cl.: F02M 25/028, B05B 1/14

(54) **SPRAYING HEAD**
SPRITZKOPF
TETE DE PULVERISATION

(30) Priority: 19.04.2002 FI 20020752
(43) Date of publication of application: 19.01.2005
(73) Proprietor: Marioff Corporation Oy, 01300 Vantaa (FI)
(72) Inventor: MAHLANEN, Timo, FIN-00850 Helsinki (FI); RÖNNBERG, Jan, FIN-02400 Kirkkonummi (FI); HONKANEN, Aimo, FIN-01420 Vantaa (FI); SUNDHOLM, Göran, FIN-04310 Tuusula (FI); METZGER, Harry, FIN-04200 Kerava (FI); TUOMISAARI, Maarit, FIN-02180 Espoo (FI)
(74) Representative: Laine, Terho Tapio
(86) International application number: PCT/FI2003/000301
(87) International publication number: WO 2003/089775

(56) References cited:
- US-A- 3 911 871
- US-A- 4 051 815
- US-A- 4 406 255
- US-A- 4 757 787
- US-A1- 2003 000 773
- PATENT ABSTRACTS OF JAPAN vol. 1997, no. 4 30 April 1997 & JP 08 338 317 A (READ KOGYO KK) 24 December 1996

## Description

### Background of the invention

The present invention relates to an intake air humidification spraying head of a piston engine as defined in the preamble of claim 1.

The exhaust gases of piston engines, in particular diesel engines, contain many kinds of noxious combustion products. At the high combustion temperatures, the combustion process in the cylinders of a piston engine produces nitrogen oxides (NOx), which are emitted together with the exhaust gases into the atmosphere. Because of the harmful environmental effects of nitrogen oxide emissions, efforts are undertaken to minimize their production. US-A-4 757 787 shows an arrangement in which water is injected into the intake air by two separate injection nozzles, based on engine load and combustion temperature.

As is known, adding water to the combustion process reduces the generation of nitrogen oxides. This phenomenon is based on the cooling effect of water. In practice, the introduction of water into the combustion process is often implemented by injecting water into the intake air. These arrangements are advantageous in respect of efficiency of the engine. The maximum amount of water introduced into the combustion space of the engine may be that amount which will remain in gaseous form in the intake air pressure and temperature conditions. US 2003000773 discloses an additive atomizing device for the atomization a liquid additive, particularly of a lubricant, in a gaseous pressure medium. However it is not suitable for humidifying intake air of an internal combustion engine or diesel engine.

The object of the invention is to achieve a completely new type of spraying head that allows the intake air to be humidified in a desired manner in different engine load conditions.

Spraying head of the invention is **characterized by** claim 1.

The spraying head of the invention is additionally **characterized by** what is stated in claims 2 - 13.

The solution of the invention has numerous significant advantages. By forming several liquid feed channels in the spraying head, it will be easy to control the amount and/or quality of water to be supplied through the spraying head. By providing the spraying head with nozzles having different properties, the characteristics of the water mist to be injected can be varied in a desired manner by opening and closing the medium channels leading to different nozzles in the spraying head. Installing the spraying head as a complete module is easy as compared with mounting several separate nozzles. In addition, the aiming direction of the nozzles of the spraying head and the distances between them can be easily adjusted to the designed settings. Moreover, the spraying head can be securely mounted in the air intake duct. Using the spraying head of the invention, diverse adjustment possibilities and, when necessary, a good water distribution through the air intake duct are achieved.

### Brief description of the drawings

In the following, the invention will be described in detail by the aid of an example with reference to the attached drawing, wherein
Fig. 1 presents an apparatus employing a spraying head according to the invention,
Fig. 2 presents a spraying head according to the invention, sectioned along line II - II in Fig. 3,
Fig. 3 presents a spraying head according to the invention,
Fig. 4 presents a spraying head according to the invention installed,
Fig. 5 presents an embodiment of the invention sectioned along line V - V in Fig. 4,
Fig. 6 presents another embodiment of the spraying head of the invention,
Fig. 7 presents the spraying head of the invention as seen from direction VII in Fig. 6, and
Fig. 8 presents a section through the spraying head in Fig. 6, taken along line VIII - VIII.

### Detailed description of the invention

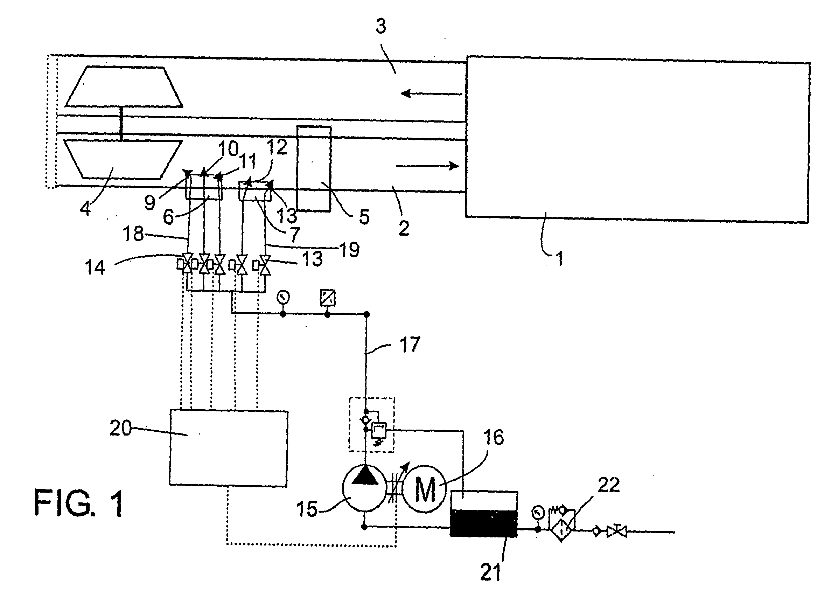

Fig. 1 presents a diagrammatic representation of an apparatus employing the spraying head of the invention, installed in connection with the air intake duct 2 of a piston engine, such as a diesel engine. In the figure, the air intake duct 2 and the exhaust duct 3 are shown in a simplified form. The engine presented in the figure is provided with a supercharger 4, which feeds air under positive pressure into the intake ductwork 2 of the engine. To reduce the nitrogen oxide emissions of the engine, the air intake ductwork is provided with at least one spraying head 6, 7, fitted to feed water mist into the intake ductwork 2. In the case illustrated in the figure, the intake ductwork is also provided with a heat exchanger element 5, such as a charge-air intercooler. In this figure, two spraying heads 6, 7 are used.

At least one spraying head 6, 7 in the spraying apparatus is connected directly to the structures 4 of the air intake duct 2 and a fine mist produced by the spraying head 6, 7 comprising at least one nozzle is injected directly into the intake air in the air intake duct. When the solution of the invention is used, no extra chambers or other containers are needed in the air intake ductwork. The nozzles feed water mist under a high pressure into the air intake duct. The water is in the form of a fine mist. Preferably 90 % of the water volume (Dv90) is in the form of droplets having a size typically below 200 micrometers, preferably below 100 micrometers and more preferably below 50 micrometers. In a typical case according to the invention, the pressure in the supply pipe is typically at least 10 bar, preferably at least 30 bar, most preferably over 50 bar. The pressure range is typically 10 - 300 bar.

The apparatus comprises means for delivering an aqueous liquid to the nozzles. In the embodiment presented in Fig. 1, the apparatus comprises a liquid source 21, from where the liquid is pumped through a pipe 17 by means of a pump 25. The pump is operated by a drive 16. The liquid can be directed via channels 18, 19 to different nozzles 6, 7. The apparatus comprises a system required for the regulation of the amount of water sprayed, by means of which system the amount of water to be evaporated into the intake air and the cooling of the intake air can be controlled. The apparatus comprises valve elements 13, 14 arranged in connection with the liquid flow passages, such as pipes 18, 19 leading to the nozzles of the spraying head. The valves 13, 14 are typically controlled by a control system 20. Thus, the liquid flow passages 18, 19 can be opened and closed as necessary.

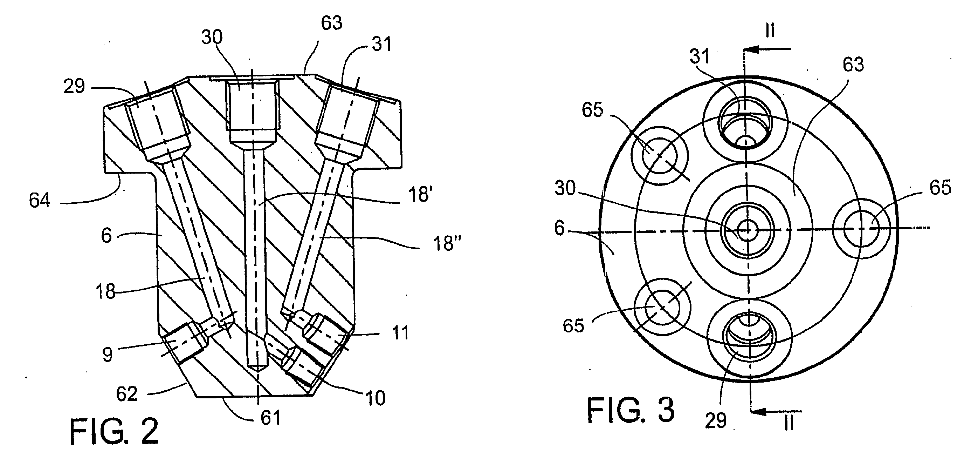

A spraying head 6 according to the invention is presented in Fig. 2 and 3. The spraying head comprises a body in which is formed at least one channel 18, 18', 18" for conveying a pressure medium to the nozzles 9, 10, 11. In the spraying head presented in the figure, a separate channel 18, 18', 18" is provided for each nozzle 9, 10, 11. This allows individual control of the flow and/or pressure of the pressure medium supplied to each nozzle 9, 10, 11.

According to another embodiment, the nozzles of the spraying head can be arranged in groups so that each feed channel communicates with several nozzles.

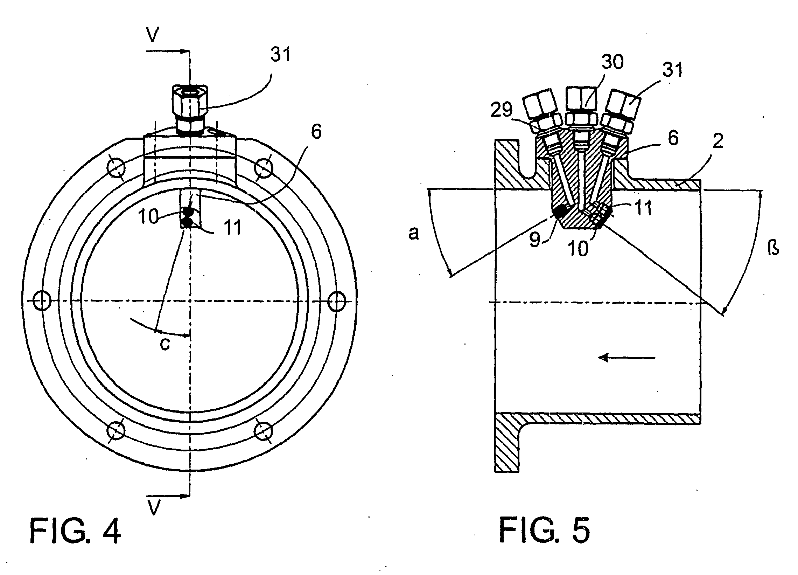

The nozzles 9, 10, 11 in the spraying head 6 may have different properties, which have been adapted according to the placement of each nozzle. The form of the spraying head, the number of nozzles and their aiming direction may vary depending on the application. Typically, at least that part of the spraying head which extends inside the space defined by the air intake duct walls 2 has been made narrower in the direction of the intake air flow than in a direction perpendicular to the direction of intake air flow. Fig. 4 and 5 illustrate a spraying head of the invention mounted in an air intake duct 2. The direction of intake air flow is indicated by an arrow in Fig. 4. Placed on the intake air entry side, the spraying head has two nozzles 10, 11 and one nozzle 9 on the exit side. The nozzles on the entry side are aimed in a direction substantially against the flow of the intake air. They may also differ by an angle β from the flow direction. The nozzle spraying substantially in the flow direction may differ from the intake air flow direction by an angle α. The nozzles may be aimed in a direction deviating from at least one vertical plane by an angle c. The angles depend on the embodiment, such as the intake air flow rate and shape of the intake ductwork, so their direction and magnitude may vary considerably from case to case. Angles α and β may vary between 0 - 90°. Angle c may vary between 0 - ±90°.

It is also possible supply different mediums, such as water and gas, to the nozzle. The nozzles are not shown in detail in the figure, but they may be replaceable depending on the application.

The nozzles are therefore of a type such that they produce a spray of fine mist when supplied with liquid under a high pressure. Many kinds of nozzles of this category are known, e.g. from fire extinguishing technology employing water mist. For example, specifications WO 92/20454 and WO 94/06567 disclose nozzles that produce a water mist at a high pressure. Naturally, other types of nozzles may also be used, e.g. specification WO 01/45799 discloses yet another nozzle.

The amount of water supplied through the nozzles typically increases with increasing engine load. Thus, when the engine load is low, it is possible to supply water only to some of the nozzles and increase the number of nozzles spraying when the load increases. Similarly, the spraying head can be provided with nozzles having different properties, such as nozzle aperture size, droplet size produced by the nozzle, etc. It is thus possible to form different combinations which can be adapted to a wide range of different applications, different engine types, different placements and conditions.

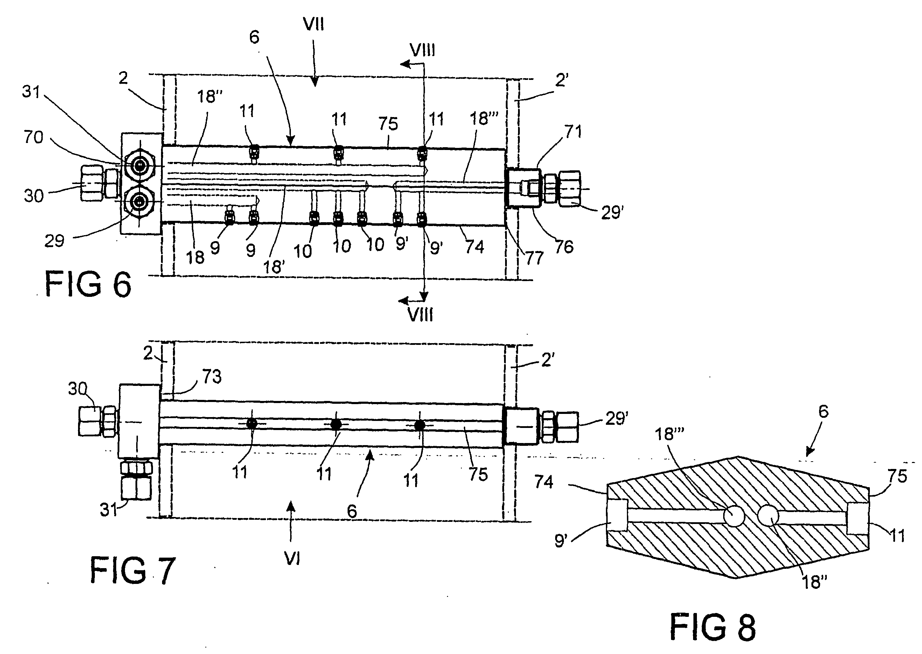

Fig. 6 - 8 present another embodiment of the spraying head 6 of the invention. The spraying head is arranged to extend substantially across the air intake duct between the opposite walls 2 - 2' of the duct. The body of the spraying, head preferably has the shape of a wing-like object. Formed in the body are channels 18, 18', 18" for supplying a to the nozzles 9, 9', 10, 11 a medium to be sprayed. In the embodiment illustrated in the figure, three inlets 29, 30, 31 into the feed channels are provided at the first end 70 of the spraying head. One inlet 29 is provided at the opposite end 71 of the spraying head. The nozzles are arranged to spray in desired directions. In the embodiment illustrated, some of the nozzles 9, 10, 9' are arranged to spray in the air intake duct against the direction of air entry while some of the nozzles 11 are arranged to spray in the direction of air flow. Nozzles 9, 9' and 10 are therefore placed at the edge 74 of the spraying head body facing against the air entry direction while nozzles 11 are placed at the air exit-side edge 75 of the body. Formed in the body of the spraying head are three channels 18, 18', 18" coming from the first end of the spraying head and one channel 18"' from the second end of the spraying head. With the spraying head of the invention, the spraying of the pressure medium to be sprayed can thus be distributed over the width of the air intake duct at least in the area of the spraying head. In addition, by directing the supply of pressure medium to different channels 18, 18', 18", 18"', it is possible to influence the operation of the spraying head feeding the air intake duct in respect of e.g. the direction of injection or the point of injection. For example, the spraying can be implemented by initially spraying by the nozzles 10 in the middle, next by also spraying by the nozzles 9, 9' in the edge part, either from one edge or both edges, and finally by spraying by the nozzles 11 at the exit-side edge as well.

Provided at the first end of the spraying head is a mating surface 73 which is pressed against the wall 2 of the air intake duct either directly or via an intermediate piece. Formed or arranged at the opposite end 71 of the spraying head is a supporting element extending to the opposite side of the opposite wall 2'. The supporting element typically is provided with threads allowing the spraying head to mounted and tightened on the air intake duct by means of a fastening element, such as a nut. The spraying head according to this second embodiment is typically mounted in an opening formed in the wall 2 of the air intake duct, said opening having dimensions such that the spraying head parts intended to go inside the air intake duct can be inserted through it. The shape of the opening is typically designed that it also guides the spraying head to the correct position in the air intake duct. Formed in the opposite wall 2' of the air intake duct is a second opening, which is so designed that at least the supporting element 76 can go through it while a second mating surface 77 formed at the other end of the spraying head remains inside the air intake duct. The spraying head is locked on the air intake duct by means of a nut provided on the supporting element 76 so that the other wall 2' remains between the second mating surface and the tightening element (not shown). This arrangement allows the spraying head to be easily and securely mounted on the air intake duct.

Fig. 8 presents a cross-sectional form of the spraying head presented in Fig. 6. That part of the spraying head which is to go inside the air intake duct is preferably formed as a wing-shaped part. In its cross-sectional form, it has a thicker portion at the middle, becoming thinner towards the edges 74, 75. In the case presented in the figure, the cross-sectional form is symmetrical, but it need not necessarily be symmetrical. The cross-sectional form can be adapted according to the application.

An apparatus employing the spraying head of the invention can fully utilize the quantity of heat required for the vaporization of water, cooling the intake air at each injection point to a temperature close to the wet bulb temperature (or adiabatic saturation temperature, which in the case of a water-air mixture is practically the same thing), i.e. to the temperature to which the temperature of air can be reduced by vaporization of water.

In the apparatus of the invention, the humidity of the intake air is preferably increased stepwise after each heat supply point. However, relative to the direction the intake air flow, water mist is injected before the last heat supply point , which can be used as a water evaporation surface.

By this arrangement, the humidity of the gas fed into the cylinder and therefore the formation of nitrogen oxides is regulated within the desired limits.

It is obvious to the person skilled in the art that the invention is not limited to the example described above, but that it may be varied within the scope of the claims presented below. Thus, the spraying head may comprise two, three, four or more nozzles. The spraying head has at least two channels.

## Claims

1. Intake air humidification spraying head of a piston engine, said spraying head comprising a body and a channel for supplying a spraying medium from an inlet to at least one nozzle, **characterized in that** the spraying head (6) is provided with at least two channels (18, 18', 18"), each forming a separate passage to at least one nozzle (9, 10, 11), and that a shutting/regulating mechanism is provided in connection with the spraying head (6) to allow the supply of medium to the channels (18, 18', 18") leading to different nozzles to be shut off/regulated.

2. Spraying head according to claim 1, **characterized in that** at least some of the nozzles (9, 10, 11) of the spraying head are different from each other.

3. Spraying head according to claim 1 or 2, **characterized in that** the nozzles (9, 10, 11) have been adapted for spraying a liquid mist.

4. Spraying head according to any one of claims 1 - 3, **characterized in that** the spraying head has been adapted for spraying a highpressure liquid mist.

5. Spraying head according to any one of claims 1 - 4, **characterized in that** the nozzles (9, 10, 11) are arranged in groups, and that at least one channel (18, 18', 18") leads to each one of said groups.

6. Spraying head according to any one of claims 1 - 5, **characterized in that** the spraying head comprises at least one nozzle (9) arranged to spray in a direction substantially against the direction of flow of the intake air.

7. Spraying head according to any one of claims 1 - 6, **characterized in that** at least some of the nozzles (9, 10, 11) are arranged to spray in a direction substantially in the same direction.

8. Spraying head according to any one of claims 1 - 7, **characterized in that** the spraying head comprises at least one nozzle (10, 11) arranged to spray substantially in the direction of flow of the intake air.

9. Spraying head according to any one of claims 1 - 8, **characterized in that** at least one of the nozzles (9, 10, 11) is arranged to spray in a direction differing from a flow of the intake air.

10. Spraying head according to any one of claims 1 - 9, **characterized in that** at least part of the spraying head extends inside an intake duct for the intake air.

11. Spraying head according to any one of claims 1 - 10, **characterized in that** a body of the spraying head has a shape of a wing-like object.

12. Spraying head according to any one of claims 1 - 11, **characterized in that** the spraying head extends substantially across a duct for the intake air.

## Patentansprüche

1. Ansaugluft-Befeuchtungssprühkopf eines Kolbenmotors, wobei der Sprühkopf einen Grundkörper und einen Kanal zum Weiterleiten eines Sprühmediums von einem Einlass zu wenigstens einer Düse enthält, **dadurch gekennzeichnet, dass** der Sprühkopf (6) mit mindestens zwei Kanälen (18, 18', 18") versehen ist, die jeweils einen gesonderten Durchflusskanal zu wenigstens einer Düse (9, 10, 11) bilden, und dass in Verbindung mit dem Sprühkopf eine Schließ/Regelvorrichtung vorgesehen (6) ist, um die Zufuhr eines Mediums zu den Kanälen (18, 18', 18") zu erlauben, die zu unterschiedlichen zu sperrenden bzw. zu regulierenden Düsen führen.

2. Sprühkopf nach Anspruch 1, **dadurch gekennzeichnet, dass** zumindest ein Teil der Düsen (9, 10, 11) des Sprühkopfs unterschiedlich sind.

3. Sprühkopf nach Anspruch 1 oder 2, **dadurch gekennzeichnet, dass** die Düsen (9, 10, 11) dazu eingerichtet sind, einen Flüssigkeitsnebel zu sprühen.

4. Sprühkopf nach einem der Ansprüche 1 - 3, **dadurch gekennzeichnet, dass** der Sprühkopf dazu eingerichtet ist, einen Hochdruckflüssigkeitsnebel zu sprühen.

5. Sprühkopf nach einem der Ansprüche 1 - 4, **dadurch gekennzeichnet, dass** die Düsen (9, 10, 11) in Gruppen angeordnet sind, und dass zu jeder einzelnen Gruppe wenigstens ein Kanal (18, 18', 18") führt.

6. Sprühkopf nach einem der Ansprüche 1 - 5, **dadurch gekennzeichnet, dass** der Sprühkopf wenigstens eine Düse (9) enthält, die dazu eingerichtet ist, in eine Richtung zu sprühen, die gegenüber der Richtung eines Stroms der Ansaugluft im Wesentlichen entgegengesetzt ist.

7. Sprühkopf nach einem der Ansprüche 1 - 6, **dadurch gekennzeichnet, dass** zumindest ein Teil der Düsen (9, 10, 11) dazu eingerichtet sind, in eine im Wesentlichen übereinstimmende Richtung zu sprühen.

8. Sprühkopf nach einem der Ansprüche 1 - 7, **dadurch gekennzeichnet, dass** der Sprühkopf wenigstens eine Düse (10, 11) enthält, die dazu eingerichtet ist, im Wesentlichen in die Strömungsrichtung der Ansaugluft zu sprühen.

9. Sprühkopf nach einem der Ansprüche 1 - 8, **dadurch gekennzeichnet, dass** mindestens eine der Düsen (9, 10, 11) dazu eingerichtet ist, in eine Richtung zu sprühen, die sich von der Strömungsrichtung der Ansaugluft unterscheidet.

10. Sprühkopf nach einem der Ansprüche 1 - 9, **dadurch gekennzeichnet, dass** sich zumindest ein Teil des Sprühkopfs im Inneren eines Ansaugkanals für die Ansaugluft erstreckt.

11. Sprühkopf nach einem der Ansprüche 1 - 10, **dadurch gekennzeichnet, dass** ein Grundkörper des Sprühkopfs die Gestalt eines flügelförmigen Objekts aufweist.

12. Sprühkopf nach einem der Ansprüche 1 - 11, **dadurch gekennzeichnet, dass** der Sprühkopf sich im Wesentlichen quer über einen Kanal für die Ansaugluft erstreckt.

## Revendications

1. Tête de pulvérisation d'humidification d'air d'admission d'un moteur à piston, ladite tête de pulvérisation comprenant un corps et un canal pour alimenter un médium de pulvérisation depuis une entrée vers au moins une buse, **caractérisé en ce que** la tête de pulvérisation (6) est pourvue d'au moins deux canaux (18, 18', 18"), chacun formant un passage séparé vers au moins une buse (9, 10, 11), et **en ce qu'**un mécanisme de fermeture/régulation est placé en liaison avec la tête de pulvérisation (6) pour permettre à l'alimentation du médium vers les canaux (18, 18', 18") menant à différentes buses d'être fermée/régulée.

2. Tête de pulvérisation selon la revendication 1, **caractérisée en ce qu**'au moins certaines des buses (9, 10, 11) de tête de pulvérisation sont différentes les unes des autres.

3. Tête de pulvérisation selon la revendication 1 ou 2, **caractérisée en ce que** les buses (9, 10, 11) ont été adaptées pour pulvériser un brouillard de liquide.

4. Tête de pulvérisation selon l'une quelconque des revendications 1-3, **caractérisée en ce que** la tête de pulvérisation a été adaptée pour pulvériser un brouillard de liquide à haute pression.

5. Tête de pulvérisation selon l'une quelconque des revendications 1-4, **caractérisée en ce que** les buses (9, 10, 11) sont agencées en groupes, et qu'au moins un canal (18, 18', 18") mène à chacun desdits groupes.

6. Tête de pulvérisation selon l'une quelconque des revendications 1-5, **caractérisée en ce que** la tête de pulvérisation comprend au moins une buse (9) agencée pour pulvériser dans une direction sensiblement contre la direction d'écoulement de l'air d'admission.

7. Tête de pulvérisation selon l'une quelconque des revendications 1-6, **caractérisée en ce qu'**au moins certaines des buses (9, 10, 11) sont agencées pour pulvériser dans une direction sensiblement dans la même direction.

8. Tête de pulvérisation selon l'une quelconque des revendications 1-7, **caractérisée en ce que** la tête de pulvérisation comprend au moins une buse (10, 11) agencée pour pulvériser sensiblement dans la direction d'écoulement de l'air d'admission.

9. Tête de pulvérisation selon l'une quelconque des revendications 1-8, **caractérisée en ce qu'**au moins l'une des buses (9, 10, 11) est agencée pour pulvériser dans une direction différant d'un écoulement de l'air d'admission.

10. Tête de pulvérisation selon l'une quelconque des revendications 1-9, **caractérisée en ce qu'**au moins une partie de la tête de pulvérisation s'étend à l'intérieur d'une conduite d'admission pour l'air d'admission.

11. Tête de pulvérisation selon l'une quelconque des revendications 1-10, **caractérisée en ce qu'**un corps de la tête de pulvérisation a la forme d'un objet en forme d'aile.

12. Tête de pulvérisation selon l'une quelconque des revendications 1-11, **caractérisée en ce que** la tête de pulvérisation s'étend sensiblement en travers d'une conduite pour l'air d'admission.
